# EUROPEAN PATENT SPECIFICATION

(11) **EP 4 266 757 B1**
(45) Date of publication and mention of the grant of the patent: **09.09.2026**
(21) Application number: 21908820.0
(22) Date of filing: 22.10.2021
(51) Int. Cl.: H04W 48/06, H04W 48/08, H04W 24/02, H04W 84/12, H04W 88/12

(54) **NETWORK CONTROL METHOD, ACCESS CONTROL DEVICE, ACCESS POINT, AND STORAGE MEDIUM**
NETZWERKSTEUERUNGSVERFAHREN, ZUGANGSSTEUERUNGSVORRICHTUNG, ZUGANGSPUNKT UND SPEICHERMEDIUM
PROCÉDÉ DE COMMANDE DE RÉSEAU, DISPOSITIF DE COMMANDE D'ACCÈS, POINT D'ACCÈS ET SUPPORT DE STOCKAGE

(30) Priority: 23.12.2020 CN 202011536920
(43) Date of publication of application: 25.10.2023
(73) Proprietor: ZTE Corporation, Shenzhen, Guangdong 518057 (CN)
(72) Inventor: LV, Zhongxing, Shenzhen, Guangdong 518057 (CN); YANG, Zhaolei, Shenzhen, Guangdong 518057 (CN); JIN, Yicheng, Shenzhen, Guangdong 518057 (CN); WU, Limeng, Shenzhen, Guangdong 518057 (CN)
(74) Representative: Zoli, Filippo
(86) International application number: PCT/CN2021/125728
(87) International publication number: WO 2022/134819

(56) References cited:
- CN-A- 103 546 308
- CN-A- 107 172 653
- CN-A- 107 172 653
- CN-A- 107 231 655
- CN-A- 107 659 948
- CN-A- 110 418 394
- KR-A- 20130 069 043
- CISCO: "Cisco Wireless Controller Configuration Guide, Release 7.0.98.0", GUIDE, 1 June 2010 (2010-06-01), US, pages 1 - 960, XP055499975, Retrieved from the Internet <URL:https://www.cisco.com/c/en/us/td/docs/wireless/controller/7-0/configuration/guide/c70.pdf>

## Description

### TECHNICAL FIELD

The present disclosure relates to the field of network communication, and in particular to a network control method, an access controller, an access point and a storage medium.

### BACKGROUND

With the development of the network communication technology, the forms of home networking become more and more diversified, and there are more and more Access Points (APs) in people's homes. For example, in a scenario with a large living area, in order to implement network roaming in the whole house, it is usually necessary to arrange access points at multiple positions to expand the coverage of the network, so that Stations (STAs) can access the network anytime and anywhere. However, since the communication and transmission between the access points may have loss and tend to be affected by distance, obstacles and other factors. When the number of access points is increased, the transmission stability of the whole network will decline. Therefore, it is advantageous to balance the coverage and transmission stability of a network.

The embodiment of CN 110418394A provides an AP management method and device. According to the scheme, the method includes: counting the total amount of the online access points APs connected to the ACs (Access Controllers) in the AC group once every a first preset time length; in response to a first difference value between the total amount of the online APs and the license total amount of the AC group being greater than zero and a second difference value between the number of the on-line APs connected to the mobile terminal and the number of licenses installed on the mobile terminal being greater than zero, determining the target number of APs to be offline according to the first difference value and the second difference value; and performing offline processing on the target number of online APs connected to the AP according to the obtained flow values of the online APs connected to the AP.

CN 107172653A discloses a method and system for carrying out connection with a plurality of wireless access points and a control system. The method includes: detecting communication data information of each wireless access point; carrying out activity sorting on the communication data information according to a preset rule; and in response to the number of the connected wireless access points reaching the maximum threshold, and an access request of a new wireless access point being received, carrying out disconnection on the wireless access point with the lowest activity, and carrying out connection with the new wireless access point.

The embodiment of CN 107659948A provides a method and an apparatus for controlling an AP access. The method is applied to an AC; the AC belongs to an AC group which further includes other ACs. Each of the ACs in the AC group shares a license file. The method includes: obtaining an available access number of each AC in the AC group; in response to a first AC in the other ACs having a fault, according to a first available access number of the first AC and a preset takeover rule, determining a second available access number that needs to be taken over locally; determining a sum value of the second available access number and a local current third available access number to obtain a to-be-used fourth available access number; and performing AP access control according to the fourth available access number.

### SUMMARY

A general summary of subject matters detailed in this disclosure is provided below. This summary is not intended to limit the protection scope of the claims.

The invention is defined by the independent claims. Additional features of the invention are provided in the dependent claims.

Embodiments of the present disclosure provide a network control method, an access controller. an access point and a storage medium, which can flexibly control the number of connected APs, balance the coverage and transmission stability of a network and increase the network quality.

The features of the network control method, the access controller, the access point and the storage medium according to embodiments of the present disclosure are set out in the appended set of claims.

Other features and advantages of the present disclosure will be set forth in the following description, and will partially become apparent from the description, or may be understood by implementing the present disclosure. The objective and other advantages of the present disclosure can be achieved and acquired by the structure particularly specified in the description, the claims, and the accompanying drawings.

### BRIEF DESCRIPTION OF DRAWINGS

The accompanying drawings are intended to provide a further understanding of the technical schemes of the present disclosure and constitute a part of the description. The accompanying drawings are used together with the embodiments of the present disclosure to illustrate the technical schemes of the present disclosure, but do not constitute a limitation to the technical schemes of the present disclosure.
FIG. 1 is a schematic diagram of a network topology of Mesh networking according to an embodiment of the present disclosure;
FIG. 2 is a flowchart of a network control method applied to an access controller according to an embodiment of the present disclosure;
FIG. 3 is a flow chart of determining the controlled number of APs according to the current number and the reference number of the APs in a normal access state according to an embodiment of the application;
FIG. 4 is a schematic diagram of another network topology of Mesh networking according to another embodiment of the present disclosure;
FIG. 5 is a flow chart of screening out a corresponding controlled number of target controlled APs from the network topology according to an embodiment of the present disclosure;
FIG. 6 is a flow chart of screening out the corresponding controlled number of target controlled APs according to a result of comparison between levels according to an embodiment of the present disclosure;
FIG. 7 is a specific flow chart of screening out the corresponding controlled number of target controlled APs according to a result of comparison between priorities of uplink modes according to an embodiment of the present disclosure;
FIG. 8 is a flow chart of screening out the corresponding controlled number of target controlled APs according to a result of comparison between signal strengths according to an embodiment of the present disclosure;
FIG. 9 is a schematic structural diagram of a control message in a TLV format according to an embodiment of the present disclosure;
FIG. 10 is a flowchart of a network control method applied to an access point according to an embodiment of the present disclosure;
FIG. 11 is a schematic structural diagram of an access controller according to an embodiment of the present disclosure; and
FIG. 12 is a schematic structural diagram of an access point according to an embodiment of the present disclosure.

### DETAILED DESCRIPTION

Objectives, technical schemes and advantages of the present disclosure will be clearer from a detailed description of embodiments of the present disclosure in conjunction with the accompanying drawings. It should be understood that the specific embodiments described herein are merely used to illustrate the present disclosure, and are not intended to limit the present disclosure.

It should be understood that in the description of the embodiments of the present disclosure, "a plurality of" (or "multiple") means one or more. "Greater than", "less than", "exceed" and the like should be understood as excluding this number, while "above", "below", "within" and the like in the description, the claims and the drawings should be understood as including this number. It is to be understood that the terms "first", "second" and the like are merely used for distinguishing technical features, but not necessary for indicating or implying relative importance, or implicitly indicating the number of indicated technical features or implicitly indicating a precedence order of the indicated technical features.

At present, Wireless Fidelity (Wi-Fi) usually adopts a networking mode with an infrastructure basic service set to access the Internet. This networking mode has an AP and a plurality of STAs. In order to provide broader Wi-Fi coverage, a Wi-Fi network may include multiple basic service sets, that is, there exist multiple APs in the Wi-Fi network. Further, in order to implement the centralized management of the multiple APs, an access controller (AC) is introduced into the Wi-Fi network. As an example of multi-AP networking, the Mesh network has become a hotspot in the field and industry of communication and academic researches. The Mesh network can be combined with various broadband wireless access technologies, such as 802.11, 802.16, 802.20, 802.3 and the like, to form a wireless mesh network with multi-hop wireless links. Such a wireless mesh network can significantly increase the coverage of a wireless system, and can increase the bandwidth capacity and communication reliability of the wireless system at the same time, so it is a very promising broadband wireless access technology.

With the increase of network coverage, the number of APs will be inevitably increased. Because the communication and transmission between APs will have loss and tends to be affected by distance, obstacles and other factors, when the number of APs is increased, the transmission stability of the whole network will decline. Therefore, it is advantageous to balance between the coverage and transmission stability of a network.

In view of the above, embodiments of the present disclosure provide a network control method, an access controller, an access point and a storage medium, which can flexibly control the number of connected APs, balance the coverage and transmission stability of a network and increase the network quality.

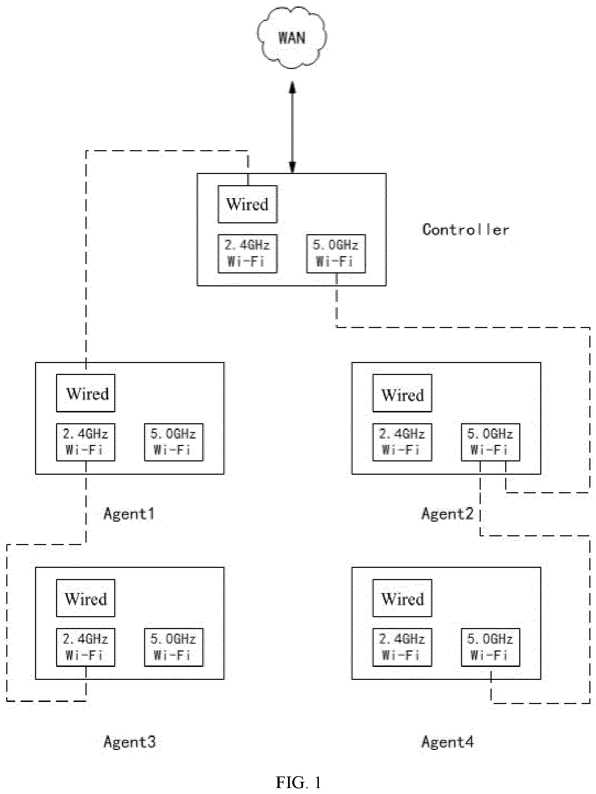

As shown in FIG. 1, FIG. 1 is a schematic diagram of a network topology of Mesh networking according to an embodiment of the present disclosure. There are a plurality of APs in this network topology.

A controller, i.e., an access controller (AC), serves as a logic control unit for the whole networking, and is configured to control a front-end network and back-end links in the whole network topology, collect capability data of APs and STAs in the networking to control a roaming policy, and deliver and synchronize a wireless configuration to agents. There may be only one controller in a network.

An agent, i.e., an access point (AP), serves as a logic entity in the network topology, and is mainly configured to receive instructions from the controller and carry out corresponding operations, including receiving a configuration synchronization instruction issued by the Controller, etc. There may be one or more Agents in a network.

One or more wired or wireless links are established between the controller and the Agents as well as between the agents through IEEE 802.3 Ethernet or IEEE 802.11 Wi-Fi.

The controller is connected with a network service provided by an operator. The controller is configured to establish a wired link connection with Agent 1 through IEEE 802.3 Ethernet, and a wireless link connection with Agent 2 through IEEE 802.11 Wi-Fi. Agent 1 and Agent 2 are configured to establish wireless link connections with Agent 3 and Agent 4 through IEEE 802.11 Wi-Fi, respectively. Further, the controller, Agent 1, Agent 2, Agent 3 and Agent 4 are configured to communicate with one another through the IEEE1905 and Multi-AP protocols. The controller, Agent 1, Agent 2, Agent 3 and Agent 4 all support the 2.4 GHz Wi-Fi band and the 5.0 GHz Wi-Fi band. The controller and Agent 2 are configured to establish a wireless link connection through the 5.0 GHz Wi-Fi band. Agent 1 and Agent 3 are configured to establish a wireless link connection through the 2.4 GHz Wi-Fi band. Agent 2 and Agent 4 are configured to establish a wireless link connection through the 5.0 GHz Wi-Fi band. It should be noted that the network topology shown in FIG. 1 is merely an example, which is used to illustrate the principle. In actual applications, the number of the APs in the network topology and the connection mode between the controller and the Agents may be determined based on an actual condition, which is not limited by the embodiments of the present disclosure.

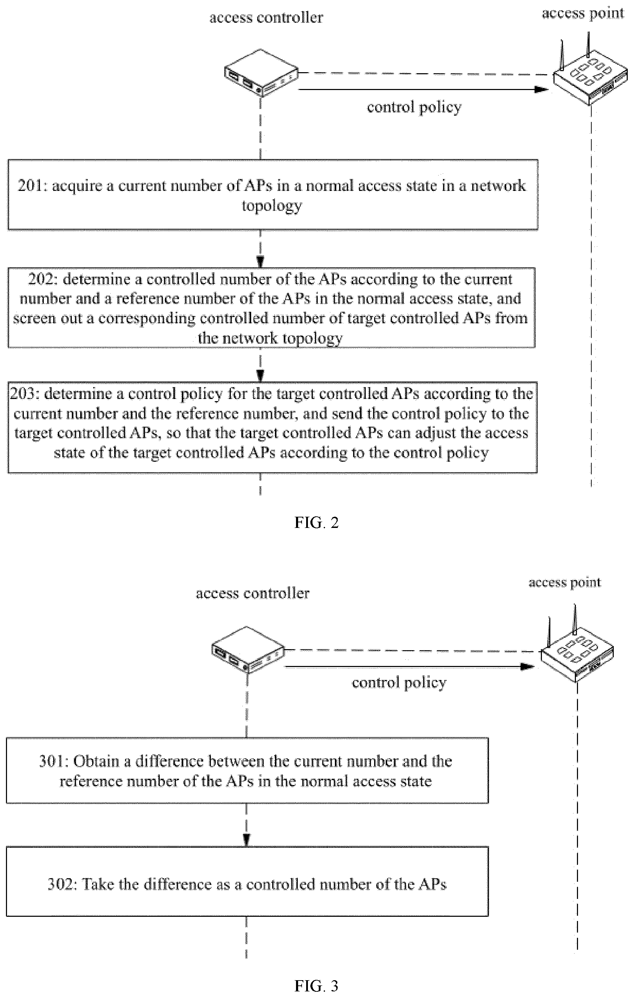

Based on the network topology shown in FIG. 1, referring to FIG. 2, an embodiment of the present disclosure provides a network control method, which is applied to an access controller. The network control method includes, but not limited to, the following steps 201 to 203.

At 201, a current number of APs in a normal access state in a network topology is acquired.

When the APs are in the normal access state, it means that the APs are in a normal network-connected state, or the APs can be normally accessed by the STAs.

In an embodiment, a current number of APs in a normal access state in the network topology may be acquired in this way such that the information of the whole network topology and backhaul links is acquired by the access controller through the IEEE1905 and Multi-AP protocols. Devices connected through the IEEE1905 protocol will announce their device information when going online, and the access controller can query the device information of other devices in the network topology through the IEEE1905 protocol, thus obtaining the architecture information and backhaul link information of the whole network topology. In the case of wireless networking, the wireless link information of the network topology and wireless network parameters, such as signal strength, may be acquired through the Multi-AP protocol. Then, the current number of the APs in the normal access state in the network topology can be extracted from such information. As an example, the current number of the APs in the normal access state in the network topology shown in FIG. 1 is four.

At 202, the number of target controlled APs is determined based on the current number and a reference number of the APs in the normal access state, and a corresponding controlled number of target controlled APs are screened out from the network topology.

In an embodiment, the reference number of the APs in the normal access state may be defined by the operator. For example, when a user purchases a network service from the operator, the operator can set the corresponding reference number based on a package purchased by the user, the user's location and other factors. As an example, the reference number of the network topology shown in FIG. 1 may be two or three. It can be understood that the reference number of the APs may also be set by the user in some cases.

The controlled number of the APs is the number of the APs that need to adjust the access state. In an embodiment, a target controlled AP is an AP that needs to be controlled. The corresponding controlled number of target controlled APs are screened out from the network topology. For example, taking FIG. 1 as an example, when the controlled number is one, one of Agent 1, Agent 2, Agent 3 and Agent 4 is chosen to be controlled.

At 203, a control policy is determined for the target controlled APs based on the current number and the reference number. The control policy is sent to the target controlled APs, so that the target controlled APs can adjust the access state based on the control policy.

The control policy for the APs may be to control the APs to disconnect network connection, resume network connection, disconnect the access of the STAs or resume the access of the STAs.

By acquiring the current number of the APs in the normal access state in the network topology, the controlled number of the APs is determined based on the current number and the reference number of the APs in the normal access state, and the corresponding controlled number of target controlled APs are screened out from the network topology. The control policy for the target controlled APs is determined based on the current number and the reference number and sent to the target controlled APs, so that the target controlled APs can adjust their access state based on the control policy. Therefore, the number of APs in the normal access state can be flexibly controlled, such that the number of APs in the normal access state can be maintained at the level of the reference number, thus balancing the coverage and transmission stability of the network and increasing the network quality.

In an embodiment, when the normal access state means that the APs can be normally accessed by the stations (STAs), correspondingly, in 203 as discussed above, the control policy for the target controlled APs is determined based on the current number and the reference number, and there may be the following two cases.

In one case, when the current number of the APs in the normal access state is greater than the reference number, it is determined that the control policy for the target controlled APs is to control the target controlled APs to stop the access of the STAs. When the current number of the APs in the normal access state is greater than the reference number, it indicates that the number of the accessed APs in a user's home has exceeded a number of APs for accessing defined by the operator. In this case, it is necessary to control the target controlled APs to stop the access of the STAs, so as to ensure the stability of the whole network.

In the other case, when the current number of the APs in the normal access state is less than the reference number, it is determined that the control policy for the target controlled APs is to control the target controlled APs to resume the access of the STAs. When the current number of the APs in the normal access state is less than the reference number, it indicates that the number of the accessed APs in the user's home does not reach the number of APs for accessing defined by the operator. In this case, the target controlled APs can be controlled to resume the access of the STAs, so as to expand the coverage of the whole network.

In another embodiment, when the normal access state is that the APs are in the normal network-connected state, if the current number of the APs in the normal access state is greater than the reference number, correspondingly, the control policy determined in 203 for the target controlled APs based on the current number and the reference number may be configured to control the target controlled APs to be disconnected from the network. Taking Agent 3 in FIG. 1 as an example for illustration, Agent 3 is disconnected from the network. That is, the wireless link corresponding to the 2.4 GHz Wi-Fi band of Agent 1 is disconnected. However, when this mode is adopted, if the network topology shown in FIG. 1 needs to be changed and another AP needs to be connected by utilizing the 2.4 GHz Wi-Fi band of Agent 1, it is necessary to re-open the 2.4 GHz Wi-Fi band of Agent 1, which makes the establishment of network connection cumbersome. In contrast, when the current number of the APs in the normal access state is greater than the reference number, the APs are controlled to stop the access of the STAs, and in this case, the APs are still in the normal network-connected state. Taking Agent 3 in FIG. 1 as an example for illustration, the wireless link between Agent 1 and Agent 3 is still in normal connection at this time, but Agent 3 cannot be accessed by the STAs. Therefore, when the network topology needs to be changed, the control mode in which the access of the STAs is forbidden can facilitate the connection between the APs in the network topology, thereby increasing the efficiency of network connection.

Referring to FIG. 3, in an embodiment, determining a controlled number of the APs based on the current number and a reference number of the APs in the normal access state in 202 further includes the following steps 301 and 302.

At 301, a difference between the current number and the reference number of the APs in the normal access state is obtained.

At 302, the difference is taken as a controlled number of the APs.

Taking the network topology shown in FIG. 1 as an example, the current number of the APs is four. Assuming that the reference number is three, the difference between the current number and the reference number of the APs is one, and it is determined that the controlled number of the APs is one. Of course, there is another case where the current number of the APs is two, and the reference number is three. In this case, the difference between the current number and the reference number of the APs is also one, and it is determined that the controlled number of the APs is one.

It can be understood that in other embodiments, the controlled number may also be preset based on the current number of the APs. For example, when the current number of the APs in the normal access state is two or three, the controlled number is one. When the number of the currently accessed APs is four or five, the controlled number is two, and so on. Of course, the above is only illustrative, and the preset current number may be determined based on an actual condition.

In an embodiment, a corresponding controlled number of target controlled APs from the network topology may be screened out in 202 in this way such that the corresponding controlled number of target controlled APs are screened out based on levels corresponding to the APs, uplink modes corresponding to the APs, signal strengths corresponding to the APs or access times corresponding to the APs in the network topology.

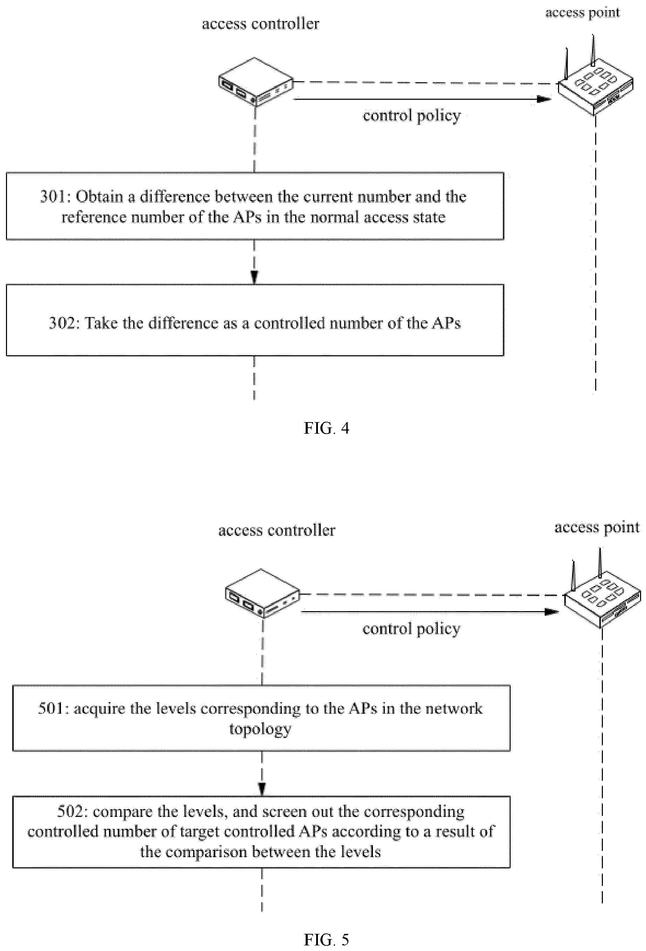

Levels corresponding to APs: Taking the network topology shown in FIG. 1 as an example, the network topology is a tree topology. In this case, Agent 1 and Agent 2 are at identical level, and Agent 3 and Agent 4 are at another level. In other embodiments, referring to FIG. 4, the network topology may also adopt a star topology. In this case, Agent 1, Agent 2, Agent 3 and Agent 4 are all at identical level.

Uplink modes corresponding to APs: Taking the network topology shown in FIG. 1 as an example, Agent 1 adopts an uplink mode of wired network connection, Agent 2 adopts an uplink mode of wireless connection in the 5.0 GHz Wi-Fi band, Agent 3 adopts an uplink mode of wireless connection in the 2.4 GHz Wi-Fi band, and Agent 4 adopts an uplink mode of wireless connection in the 5.0 GHz Wi-Fi band.

Signal strengths corresponding to APs: Generally, the signal strengths corresponding to APs are only discussed with respect to the establishment of wireless link connection through Wi-Fi.

Access times corresponding to APs: The access time corresponding to an AP is the time when the AP accesses the network. For example, when Agent 1 is connected to the Controller at XX: XX: XX on XX, XX, this time is the time when Agent 1 accesses the network, and the same is true for Agent 2, Agent 3 and Agent 4.

It can be understood that the target controlled APs may be screened out based on one or any combination of the levels corresponding to the APs, the uplink modes corresponding to the APs, the signal strengths corresponding to the APs and the access times corresponding to the APs.

The levels corresponding to the APs may be different. It can be understood that the closer to the Controller an AP is, the lower the level of the AP is. Taking the network topology shown in FIG. 1 as an example, the levels of Agent 1 and Agent 2 are lower than the levels of Agent 3 and Agent 4.

The uplink modes corresponding to the APs may be prioritized. For example, under the identical access bandwidth, the transmission rates of wireless connection in the 2.4 GHz Wi-Fi band, wireless connection in the 5.0 GHz Wi-Fi band and wired connection increase in sequence, so the priorities of the different uplink modes can be determined based on the transmission rates.

The signal strengths corresponding to the APs may be different. For example, the strength of a Wi-Fi signal sent by an AP may be affected by parameters of the device, the environment where the device is located and other factors.

The access times corresponding to the APs may be in sequence, which can be determined based on the natural times when the APs actually access the network.

In view of the above, referring to FIG. 5, in an embodiment, screening out a corresponding controlled number of target controlled APs from the network topology in 202 may further include the following steps 501 and 502.

At 501, the levels corresponding to the APs in the network topology are acquired.

In an embodiment, based on the network topology shown in FIG. 1, the access controller may be configured to acquire the information of the whole network topology and the backhaul links through the IEEE1905 and Multi-AP protocols, and extract the levels corresponding to the APs in the network topology.

At 502, the levels are compared, and the corresponding controlled number of target controlled APs are screened out based on a result of comparison between the levels.

In an embodiment, when the current number of the APs in the normal access state is greater than the reference number of the APs, the corresponding controlled number of APs need to be controlled to stop the access of the STAs. Because the back-end link of an AP with a lower level may be connected to other APs, a corresponding controlled number of target controlled APs may be screened out based on a result of comparison between the levels in 502 in this way such that the APs corresponding to high levels are taken as target controlled APs. For example, in the network topology shown in FIG. 1, Agent 3 may be taken as a target controlled AP in the above case. Of course, if the controlled number is two, Agent 3 and Agent 4 may be taken as target controlled APs at the same time. It can be understood that when the current number of the APs in the network topology significantly exceeds the reference number, the APs with lower levels may also be controlled to stop the access of the STAs. Taking the network topology shown in FIG. 1 as an example, when the controlled number is three, one of Agent 1 and Agent 2 may also be controlled to stop the access of the STAs.

In an embodiment, when the current number of the APs in the normal access state is less than the reference number, the corresponding controlled number of APs need to be controlled to resume the access of the STAs. For a similar reason, in this case, a corresponding controlled number of target controlled APs may be screened out based on a result of comparison between the levels in 502 in this way such that the APs corresponding to low levels are taken as target controlled APs. For example, in the network topology shown in FIG. 1, Agent 1 or Agent 2 may be taken as target controlled AP in the above case.

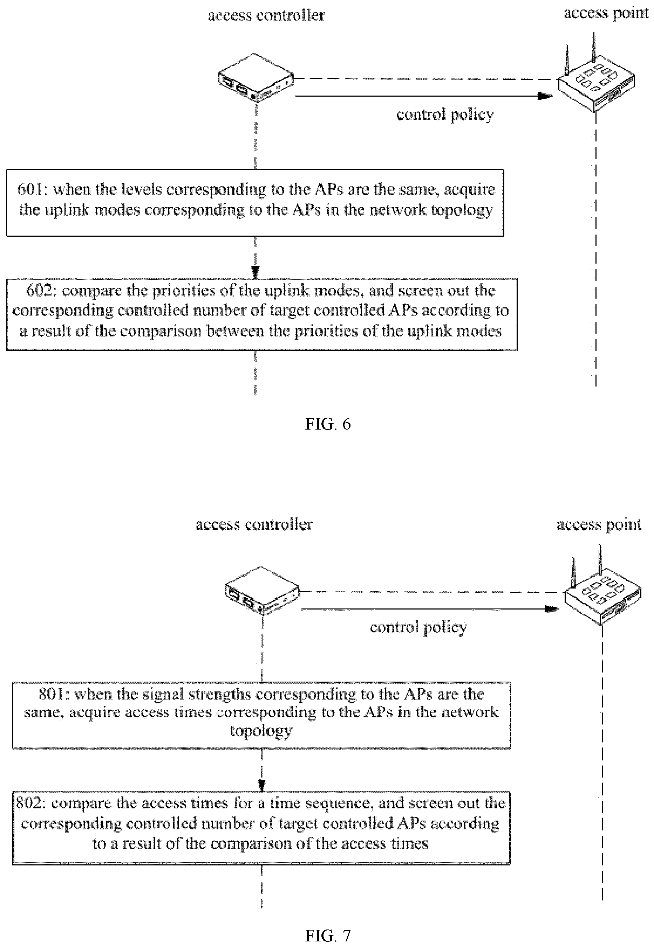

Referring to FIG. 6, in an embodiment, screening out the corresponding controlled number of target controlled APs based on a result of comparison between the levels in 502 may further include the following steps 601 and 602.

At 601, when the levels corresponding to the APs are identical, uplink modes corresponding to the APs in the network topology are acquired.

In an embodiment, when the levels corresponding to the APs are identical, for example, the network topology shown in FIG. 4. Because the topology shown in FIG. 4 is a star topology, the levels corresponding to Agent 1, Agent 2, Agent 3 and Agent 4 are identical. In this case, a determination may be further made based on the uplink modes.

In an embodiment, based on the network topology shown in FIG. 4, the access controller may be configured to acquire the information of the whole network topology and the backhaul links through the IEEE1905 and Multi-AP protocols, and extract the uplink modes corresponding to the APs in the network topology.

At 602, the priorities of the uplink modes are compared, and the corresponding controlled number of target controlled APs are screened out based on a result of comparison between the priorities of the uplink modes.

In an embodiment, based on the prioritization of the uplink modes, when the current number of the APs in the normal access state is greater than the reference number of the APs, the corresponding controlled number of APs need to be controlled to stop the access of the STAs. In this case, a corresponding controlled number of target controlled APs may be screened out based on a result of comparison between the priorities of the uplink modes in 602 in this way such that the APs corresponding to low-priority uplink modes are taken as target controlled APs. For example, in the network topology shown in FIG. 4, Agent 3 or Agent 4 may be taken as target controlled AP in the above case.

In an embodiment, when the current number of the APs in the normal access state is less than the reference number of the APs, the corresponding controlled number of APs need to be controlled to resume the access of the STAs based on the prioritization of the uplink modes. In this case, a corresponding controlled number of target controlled APs may be screened out based on a result of comparison between the priorities of the uplink modes in 602 in this way such that the APs corresponding to high-priority uplink modes are taken as target controlled APs. For example, in the network topology shown in FIG. 4, Agent 1 may be taken as a target controlled AP in the above case.

Referring to FIG. 7, in an embodiment, screening out the corresponding controlled number of target controlled APs based on a result of comparison between the priorities of the uplink modes in 602 may further include the following steps 701 and 702.

At 701, when the priorities of the uplink modes corresponding to the APs are identical, signal strengths corresponding to the APs in the network topology are acquired.

In an embodiment, when the priorities of the uplink modes corresponding to the APs are identical, for example, in the network topology shown in FIG. 4, the uplink modes of Agent 3 and Agent 4 are both wireless connections in the 2.4 GHz Wi-Fi band. In this case, a determination may be further made based on the signal strengths.

In an embodiment, based on the network topology shown in FIG. 4, the access controller may be configured to acquire the information of the whole network topology and the backhaul links through the IEEE1905 and Multi-AP protocols, and extract the signal strengths corresponding to the APs in the network topology.

At 702, the signal strengths are compared, and the corresponding controlled number of target controlled APs are screened out based on a result of comparison between the signal strengths.

In an embodiment, when the current number of the APs in the normal access state is greater than the reference number of the APs, the corresponding controlled number of APs need to be controlled to stop the access of the STAs. When both the levels and the uplink modes are identical, the corresponding controlled number of target controlled APs may be screened out based on a result of comparison between the signal strengths in 702 in this way such that the APs corresponding to low signal strengths are taken as target controlled APs. For example, in the network topology shown in FIG. 4, the signal strength of Agent 3 is higher than that of Agent 4. In the above case, Agent 4 may be taken as a target controlled AP.

In an embodiment, when the current number of the APs in the normal access state is less than the reference number, the corresponding controlled number of APs need to be controlled to resume the access of the STAs. When both the levels and the uplink modes are identical, the corresponding controlled number of target controlled APs may be screened out based on a result of comparison between the signal strengths in 702 in this way such that the APs corresponding to high signal strengths are taken as target controlled APs. For example, in the network topology shown in FIG. 4, the signal strength corresponding to Agent 3 is higher than that corresponding to Agent 4. In the above case, Agent 3 may be taken as a target controlled AP.

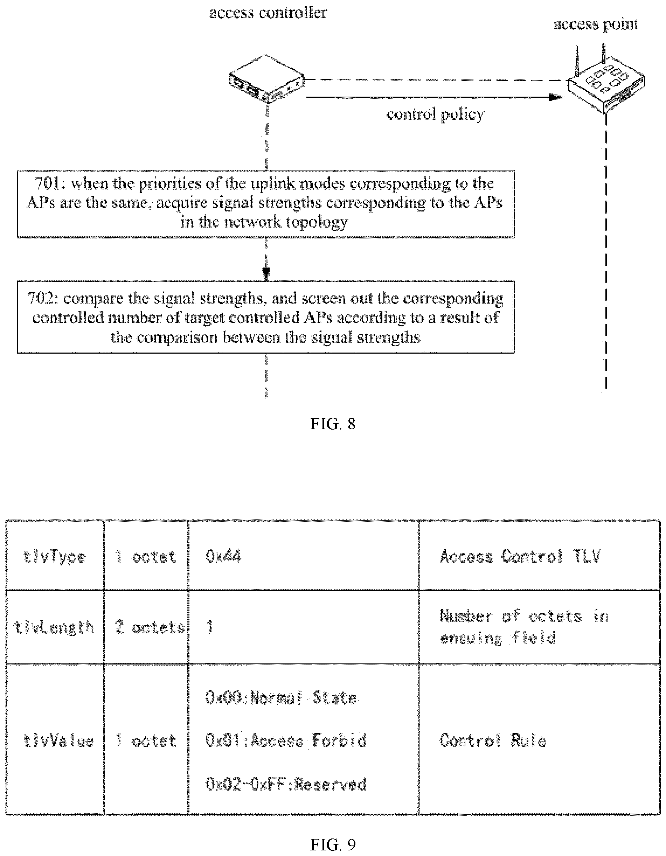

Referring to FIG. 8, in an embodiment, screening out the corresponding controlled number of target controlled APs based on a result of comparison between the signal strengths in 702 may further include the following step 801 and 802.

At 801, when the signal strengths corresponding to the APs are identical, access times corresponding to the APs in the network topology are acquired.

In an embodiment, when the signal strengths corresponding to the APs are identical, a determination may be further made based on the access times.

In an embodiment, based on the network topology shown in FIG. 4, the access controller may be configured to acquire the information of the whole network topology and the backhaul links through the IEEE1905 and Multi-AP protocols, and extract the access times corresponding to the APs in the network topology.

At 802, the access times are compared for a time sequence, and the corresponding controlled number of target controlled APs are screened out based on a result of comparison of the access times.

In an embodiment, when the current number of the APs in the normal access state is greater than the reference number of the APs, the corresponding controlled number of APs need to be controlled to stop the access of the STAs. When the levels, the uplink modes and the signal strengths are identical, the corresponding controlled number of target controlled APs may be screened out based on a result of comparison of the access times in 802 in this way such that the APs which access the network later are taken as target controlled APs. For example, in the network topology shown in FIG. 4, the access time of Agent 3 is earlier than that of Agent 4. In the above case, Agent 4 may be taken as a target controlled AP.

In an embodiment, when the current number of the APs in the normal access state is less than the reference number, the corresponding controlled number of APs need to be controlled to resume the access of the STAs. When the levels, the uplink modes and the signal strengths are identical, the corresponding controlled number of target controlled APs may be screened out based on a result of comparison of the access times in 802 in this way such that the APs which access the network earlier are taken as target controlled APs. For example, in the network topology shown in FIG. 4, the access time of Agent 3 is earlier than that of Agent 4. In the above case, Agent 3 may be taken as a target controlled AP.

It can be understood that the levels have a great influence on the whole network topology, so the levels corresponding to the APs are compared first. When the layers corresponding to the APs are identical, because the uplink modes have a great influence on the transmission rates and stability of the APs, the uplink modes can be further compared. When the uplink modes corresponding to the APs are identical, the signal strengths can be further compared. When the signal strengths corresponding to the APs are identical, the access times can be further compared. Therefore, the reasonability of target controlled AP screening can be increased by screening out target controlled APs based on the levels, the uplink modes, the signal strengths and the access times corresponding to the APs successively, thereby making the control of the whole network more efficient and increasing the network quality.

In an embodiment, the control policy is carried by a control message in a TLV format. Specifically, after confirming the control policy corresponding to the target controlled APs, the access controller is configured to use the control message in the TLV format to carry the control policy, and send the control message to the target controlled APs. TLV stands for Type, Length and Value. FIG. 9 is a schematic structural diagram of the control message in the TLV format according to an embodiment of the present disclosure. For example, after the control policy for the target controlled APs is confirmed, a value corresponding to a tlvValue field can be obtained. The control message in the TLV format can be easily expanded on the basis of the IEEE1905 and Multi-AP protocols, thereby reducing resource occupation during network control and helping to increase the standardization of the network control method according to the embodiment of the present disclosure. Therefore, the applicability of the network control method according to the embodiment of the present disclosure is wide.

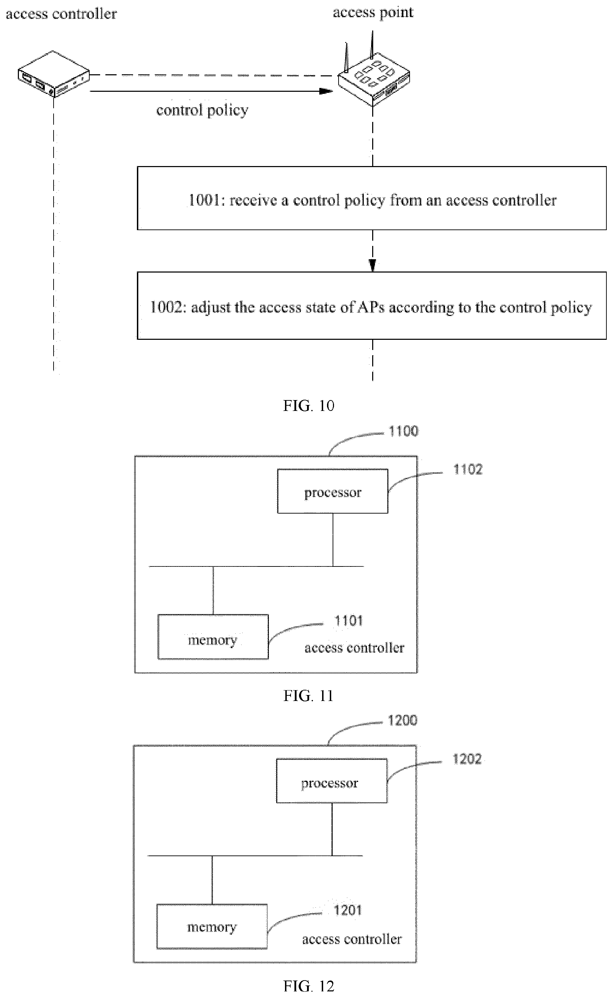

Referring to FIG. 10, an embodiment of the present disclosure provides a network control method, which is applied to APs. The network control method includes, but not limited to, the following steps 1001 to 1002.

At 1001, a control policy from an access controller is received.

The control policy is determined by the access controller based on a current number of APs in a normal access state in a network topology and a reference number of the APs in the normal access state in the network topology.

At 1002, the access state of APs is adjusted based on the control policy.

Since the control policy is determined by the access controller based on the current number of the APs in the normal access state and the reference number of the APs in the normal access state in the network topology and the APs are configured to adjust their own access state according to the control policy, the number of accessed APs can be flexibly controlled, such that the number of accessed APs can be maintained at the level of the reference number, thereby balancing the coverage and transmission stability of the network and increasing the network quality.

The control policy is carried by the control message in the TLV format, and the access state of APs may be adjusted based on the control policy in 1002 in this way such that the access of the STAs is stopped according to the control message, or the access of the STA is resumed according to the control message.

The network control method according to the embodiment of the present disclosure will be illustrated with actual application scenarios below.

Scenario 1: Taking the network topology shown in FIG. 1 as an example, at first, the Controller is configured to acquire a current number of APs in a normal access state in the network topology, which is four. There are only four APs in the network topology, while a reference number of the APs specified by the operator is five. Since the total number of the APs is less than the reference number, it is considered that the number of the APs does not need to be controlled in this scenario.

Scenario 2: Taking the network topology shown in FIG. 1 as an example, at first, the Controller is configured to acquire a current number of APs in a normal access state in the network topology, which is 4, while a reference number of the APs specified by the operator is two. Since the current number of the APs in the normal access state is greater than the reference number, the Controller determines that a controlled number of the APs is two. Based on levels corresponding to the APs, it is determined that target controlled APs are Agent 3 and Agent 4. Then, the Controller is configured to generate a control message in the TLV format, and send the control message to Agent 3 and Agent 4, so that Agent 3 and Agent 4 stop the access of STAs.

Scenario 3: On the basis of scenario 2, because the user has upgraded the network service purchased from the operator, the reference number of APs specified by the operator has been changed from two to four. In this case, since the number of APs which have stopped the access of the STAs in the network topology is two and the current number of the APs in the normal access state is less than the reference number, the Controller determines that a controlled number of the APs is two, and it is determined that target controlled APs are Agent 3 and Agent 4. Then, the Controller is configured to generate a control message in the TLV format, and send the control message to Agent 3 and Agent 4, so that Agent 3 and Agent 4 resume the access of the STAs.

Scenario 4: On the basis of scenario 2, because the user has upgraded the network service purchased from the operator, the reference number of APs specified by the operator has been changed from two to three. In this case, since the number of APs which have stopped the access of the STAs in the network topology is two and the current number of the APs in the normal access state is less than the reference number, the Controller determines that a controlled number of the APs is one. Because levels corresponding to Agent 3 and Agent 4 are identical, it is determined based on the priority of an uplink mode that a target controlled AP is Agent 4. Then, the Controller is configured to generate a control message in the TLV format, and send the control message to Agent 4, so that Agent 4 resumes the access of the STAs.

Scenario 5: Taking the network topology shown in FIG. 4 as an example, at first, the Controller is configured to acquire a current number of APs in a normal access state in the network topology, which is 4, while a reference number of the APs specified by the operator is two. Since the current number of the APs in the normal access state is greater than the reference number, the Controller determines that a controlled number of the APs is two. Based on uplink modes corresponding to the APs, it is determined that target controlled APs are Agent 3 and Agent 4. Then, the Controller is configured to generate a control message in the TLV format, and send the control message to Agent 3 and Agent 4, so that Agent 3 and Agent 4 stop the access of STAs. On this basis, the user manually turns off Agent 2. In this case, Agent 1 is the only AP in the normal access state, while the reference number of APs specified by the operator is two. Since the current number of the APs in the normal access state is less than the reference number, the Controller determines that a controlled number of the APs is one. Because the uplink modes of Agent 3 and Agent 4 are identical, based on signal strengths corresponding to the APs, it is determined that a target controlled AP is Agent 3. Then, the Controller is configured to generate a control message in the TLV format, and send the control message to Agent 3, so that Agent 3 resumes the access of the STAs.

It should also be understood that various implementations provided by the embodiments of the present disclosure may be arbitrarily combined to achieve different technical effects.

FIG. 11 shows an access controller 1100 according to an embodiment of the present disclosure. The access controller 1100 includes a memory 1101, a processor 1102 and a computer program stored in the memory 1101 and executable by the processor 1102 which, when executed by the processor 1102, causes the processor 1102 to implement the above network control methods.

The processor 1102 and the memory 1101 may be connected through a bus or in other ways.

As a non-transitory computer-readable storage medium, the memory 1101 may be configured to store a non-transitory software program and a non-transitory computer-executable program, such as the network control methods described in the embodiments of the present disclosure. The processor 1102 implements the above network control methods by executing the non-transient software program and instructions stored in the memory 1101.

The memory 1101 may include a program storage area and a data storage area. The storage program area may store an operating system and an application required by at least one function. The data storage area may store data for executing the above network control methods. In addition, the memory 1101 may include a high-speed random access memory 1101, and may also include a non-transitory memory 1101, e.g., at least one storage device, flash memory device or other non-transitory solid-state storage devices. In some embodiments, the memory 1101 may include memories 1101 disposed remotely relative to the processor 1102, and these remote memories 1101 may be connected to the access controller 1100 through a network. Examples of the above network include, but not limited to, the Internet, an intranet, a local area network, a mobile communication network, and combinations thereof.

The non-transient software program and instructions required to implement the above network control methods are stored in the memory 1101 which, when executed by one or more processors 1102, cause the one or more processors 1102 to implement the above-mentioned network control methods, e.g., method steps 201 to 203 in FIG. 2, 301 and 302 in FIG. 3, 501 and 502 in FIG. 5, 601 and 602 in FIG. 6, 701 and 702 in FIG. 7, and 801 and 802 in FIG. 8.

FIG. 12 shows an access point 1200 according to an embodiment of the present disclosure. The access point 1200 includes a memory 1201, a processor 1202 and a computer program stored in the memory 1201 and executable by the processor 1202 which, when executed by the processor 1202, causes the processor 1202 to implement the above network control methods.

The processor 1202 and the memory 1201 may be connected through a bus or in other ways.

As a non-transitory computer-readable storage medium, the memory 1201 may be configured to store a non-transitory software program and a non-transitory computer-executable program, such as the network control methods described in the embodiments of the present disclosure. The processor 1202 implements the above network control methods by executing the non-transient software program and instructions stored in the memory 1201.

The memory 1201 may include a program storage area and a data storage area. The storage program area may store an operating system and an application required by at least one function. The data storage area may store data for executing the above network control methods. In addition, the memory 1201 may include a high-speed random access memory 1201, and may also include a non-transitory memory 1201, e.g. at least one storage device, flash memory device or other non-transitory solid-state storage devices. In some embodiments, the memory 1201 may include memories 1201 disposed remotely relative to the processor 1202, and these remote memories 1201 may be connected to the access point 1200 through a network. Examples of the above network include, but not limited to, the Internet, an intranet, a local area network, a mobile communication network, and combinations thereof.

The non-transient software program and instructions required to implement the above network control methods are stored in the memory 1201 which, when executed by the processor 1202, causes the processor 1202 to implement the above-mentioned network control methods, e.g., 1001 and 1002 in FIG. 10.

An embodiment of the present disclosure provides a computer-readable storage medium, storing a computer-executable instruction for executing the above network control methods.

In an embodiment, the computer-readable storage medium stores a computer-executable instruction which, when executed by one or more control processors, causes the one or more control processors to implement, for example, the method steps 201 to 203 in FIG. 2, 301 and 302 in FIG. 3, 501 and 502 in FIG. 5, 601 and 602 in FIG. 6, 701 and 702 in FIG. 7, 801 and 802 in FIG. 8, and 1001 and 1002 in FIG. 10.

The embodiments of the present disclosure at least provides the following beneficial effects. By acquiring the current number of the APs in the normal access state in the network topology, the controlled number of the APs is determined based on the current number and the reference number of the APs in the normal access state, the corresponding controlled number of target controlled APs are screened out from the network topology. The control policy for the target controlled APs is determined based on the current number and the reference number and sent to the target controlled APs, so that the target controlled APs can adjust their access state based on the control policy. Therefore, the number of APs in the normal access state can be flexibly controlled, such that the number of APs in the normal access state can be maintained at the level of the reference number, thereby balancing the coverage and transmission stability of the network and increasing the network quality.

The embodiment of the device described is merely schematic in which the units illustrated as separate components may or may not be physically separated, that is, the units may be located in one place or distributed on a plurality of network units. Some or all of the modules may be selected according to actual needs to achieve the objective of the scheme of the present embodiment.

It can be understood by those having ordinary skills in the art that all or some of the steps in the method and the system disclosed above may be implemented as software, firmware, hardware and an appropriate combination thereof. Some or all of the physical components may be implemented as software executed by a processor (such as a central processing unit, a digital signal processor or a microprocessor), hardware or an integrated circuit (such as an Application-Specific Integrated Circuit). Such software may be distributed on computer-readable media, which may include computer storage media (or non-transitory media) and communication media (or transitory media). As well-known to those having ordinary skills in the art, the term "computer storage media" include volatile and nonvolatile, removable and non-removable media implemented in any method or technology for storing information (such as computer-readable instructions, data structures, program modules or other data). Computer storage media include, but not limited to, RAM, ROM, EEPROM, flash memory or other memory technologies, CD-ROM, digital versatile disk (DVD) or other optical disk storage, magnetic cassettes, magnetic tapes, storage or other magnetic storage devices or any other media that can be used to store desired information and can be accessed by computers. Furthermore, it is well-known to those having ordinary skills in the art that communication media typically contain computer-readable instructions, data structures, program modules or other data in a modulated data signal such as carriers or other transmission mechanisms, and can include any information delivery media.

Some embodiments of the present disclosure have been described in detail above, but the present disclosure is not limited thereto.

## Claims

1. A network control method performed by an access controller, AC, comprising:
acquiring (201) a current number of access points, APs, in a normal access state in a network topology;
determining (202) a controlled number of the APs based on the current number and a reference number of the APs in the normal access state, and screening out a corresponding controlled number of target controlled APs from the network topology; and
determining (203) a control policy for the target controlled APs based on the current number and the reference number, and
the method being **characterized by** further comprising:
sending the control policy to the target controlled APs, so that the target controlled APs are configured to adjust the access state of the target controlled APs based on the control policy;
wherein the normal access state means that the APs are normally accessed by stations, STAs, and determining (203) a control policy for the target controlled APs based on the current number and the reference number comprises one of:
in response to the current number being greater than the reference number, a determination is made that the control policy for the target controlled APs is to control the target controlled APs to stop the access of the STAs; and
in response to the current number being less than the reference number, a determination is made that the control policy for the target controlled APs is to control the target controlled APs to resume the access of the STAs.

2. The network control method of claim 1, wherein determining (202) a controlled number of the APs based on the current number and a reference number of the APs in the normal access state comprises:
obtaining (301) a difference between the current number and the reference number of the APs in the normal access state; and
taking (302) the difference as the controlled number of the APs.

3. The network control method of claim 1, wherein screening out a corresponding controlled number of target controlled APs from the network topology comprises:
screening out the corresponding controlled number of target controlled APs based on at least one of levels in the network topology corresponding to the APs, uplink modes corresponding to the APs, signal strengths corresponding to the APs, or access times when the APs access the network corresponding to the APs in the network topology.

4. The network control method of claim 1, wherein screening out a corresponding controlled number of target controlled APs from the network topology comprises:
acquiring (501) the levels corresponding to the APs in the network topology; and
comparing (502) the levels, and screening out the corresponding controlled number of target controlled APs based on a result of comparison between the levels.

5. The network control method of claim 4, wherein screening out the corresponding controlled number of target controlled APs based on a result of comparison between the levels comprises:
in response to the levels corresponding to the APs being identical, acquiring (601) the uplink modes corresponding to the APs in the network topology;
comparing (602) priorities of the uplink modes, and screening out the corresponding controlled number of target controlled APs based on a result of comparison between the priorities of the uplink modes.

6. The network control method of claim 5, wherein screening out the corresponding controlled number of target controlled APs based on a result of comparison between the priorities of the uplink modes comprises:
in response to the priorities of the uplink modes corresponding to the APs being identical, acquiring (701) signal strengths corresponding to the APs in the network topology; and
comparing (702) the signal strengths, and screening out the corresponding controlled number of target controlled APs based on a result of comparison between the signal strengths.

7. The network control method of claim 6, wherein screening out the corresponding controlled number of target controlled APs based on a result of comparison between the signal strengths comprises:
in response to the signal strengths corresponding to the APs being identical, acquiring (801) access times corresponding to the APs in the network topology; and
comparing (802) the access times for a time sequence, and screening out the corresponding controlled number of target controlled APs based on a result of comparison of the access times.

8. The network control method of claim 1, wherein the control policy is carried by a control message in a TLV format.

9. A network control method performed by an access point, AP, **characterized by** comprising:
receiving (1001) a control policy from an access controller, wherein the control policy is determined by the access controller based on a current number of APs in a normal access state in a network topology and a reference number of the APs in the normal access state in the network topology; and
adjusting (1002) the access state of the APs based on the control policy;
wherein the control policy is carried by a control message in a TLV format, and adjusting (1002) the access state of the APs based on the control policy comprises at least one of:
stopping the access of STAs based on the control message; or
resuming the access of the STAs based on the control message.

10. An access controller (1100), comprising a processor (1102), and a memory (1101) storing a computer program which, when executed by the processor (1102), causes the processor (1102) to perform the network control method of any of claims 1 to 8.

11. An access point (1200), comprising a processor (1202), and a memory (1201) storing a computer program which, when executed by the processor (1202), causes the processor (1202) to perform the network control method of claim 9.

12. A computer-readable storage medium, storing a program which, when executed by a processor, causes the processor to perform the network control method performed by an access controller (1100) of any of claims 1 to 8 or to perform the network control method performed by an access point (1200) of claim 9.

## Patentansprüche

1. Netzsteuerungsverfahren, durchgeführt von einer Zugriffssteuerung, AC, umfassend:
Erfassen (201) der aktuellen Anzahl von Zugriffspunkten, APs in einem normalen Zugriffszustand einer Netztopologie;
Bestimmen (202) einer kontrollierten Anzahl der APs basierend auf der aktuellen Anzahl und einer Referenzanzahl der APs in dem normalen Zugriffszustand und Herausfiltern einer entsprechenden kontrollierten Anzahl von betroffenen kontrollierten APs aus der Netztopologie; und
Bestimmen (203) einer Steuerungsrichtlinie für die betroffenen kontrollierten APs basierend auf der aktuellen Anzahl und der Referenzanzahl, und
wobei das Verfahren **dadurch gekennzeichnet ist, dass** es ferner Folgendes umfasst:
Senden der Steuerungsrichtlinie an die betroffenen kontrollierten APs, sodass die betroffenen kontrollierten APs konfiguriert werden, um den Zugriffsstatus der betroffenen kontrollierten APs basierend auf der Steuerungsrichtlinie anzupassen;
wobei der normale Zugriffszustand bedeutet, dass auf die APs normalerweise von Stationen (STAs) zugegriffen wird, und ein Bestimmen (203) einer Steuerungsrichtlinie für die betroffenen kontrollierten APs basierend auf der aktuellen Anzahl und der Referenzanzahl eines von Folgenden umfasst:
als Reaktion darauf, dass die aktuelle Anzahl größer ist als der Referenzwert, erfolgt eine Bestimmung, dass die Steuerungsrichtlinie für die betroffenen kontrollierten APs darin besteht, die betroffenen kontrollierten APs zu kontrollieren, um den Zugriff der STAs zu unterbinden; und
als Reaktion darauf, dass die aktuelle Anzahl niedriger ist als der Referenzwert, erfolgt eine Bestimmung, dass die Steuerungsrichtlinie für die betroffenen kontrollierten APs darin besteht, die betroffenen kontrollierten APs zu kontrollieren, um den Zugriff der STAs wieder aufzunehmen.

2. Netzsteuerungsverfahren nach Anspruch 1, wobei ein Bestimmen (202) einer kontrollierten Anzahl der APs basierend auf der aktuellen Anzahl und einer Referenzanzahl der APs in dem normalen Zugriffszustand Folgendes umfasst:
Erlangen (301) einer Differenz zwischen der aktuellen Anzahl und der Referenzanzahl der APs in dem normalen Zugriffszustand; und
Verwenden (302) der Differenz als die kontrollierte Anzahl der APs.

3. Netzsteuerungsverfahren nach Anspruch 1, wobei ein Herausfiltern einer entsprechenden, kontrollierten Anzahl von betroffenen kontrollierten APs aus der Netztopologie Folgendes umfasst:
Herausfiltern der entsprechenden kontrollierten Anzahl von betroffenen kontrollierten APs basierend auf mindestens einem von Ebenen in der Netztopologie, die den APs entsprechen, Uplink-Modi, die den APs entsprechen; Signalstärken, die den APs entsprechen, oder Zugriffszeiten, an denen die APs auf das Netz zugreifen, die den APs in der Netztopologie entsprechen.

4. Netzsteuerungsverfahren nach Anspruch 1, wobei ein Herausfiltern einer entsprechenden, kontrollierten Anzahl von betroffenen kontrollierten APs aus der Netztopologie Folgendes umfasst:
Erfassen (501) der Ebenen, die den APs in der Netztopologie entsprechen; und
Vergleichen (502) der Ebenen und Herausfiltern der entsprechenden kontrollierten Anzahl von betroffenen kontrollierten APs basierend auf einem Resultat des Vergleichs zwischen den Ebenen.

5. Netzsteuerungsverfahren nach Anspruch 4, wobei ein Herausfiltern der entsprechenden kontrollierten Anzahl von betroffenen kontrollierten APs basierend auf einem Vergleichsresultat zwischen den Ebenen Folgendes umfasst:
als Reaktion darauf, dass die Ebenen, die den APs entsprechen, identisch sind, Erfassen (601) der Uplink-Modi. die den APs in der Netztopologie entsprechen;
Vergleichen (602) von der Prioritäten der Uplink-Modi und Herausfiltern der entsprechenden kontrollierten Anzahl von betroffenen kontrollierten APs basierend auf einem Resultat des Vergleichs zwischen den Prioritäten der Uplink-Modi.

6. Netzsteuerungsverfahren nach Anspruch 5, wobei ein Herausfiltern der entsprechenden kontrollierten Anzahl von betroffenen kontrollierten APs basierend auf einem Resultat des Vergleichs zwischen den Prioritäten der Uplink-Modi Folgendes umfasst:
als Reaktion darauf, dass die Prioritäten der Uplink-Modi, die den APs entsprechen, identisch sind, Erfassen (701) der Signalstärken, die den APs in der Netztopologie entsprechen; und
Vergleichen (702) der Signalstärken und Herausfiltern der entsprechenden kontrollierten Anzahl von betroffenen kontrollierten APs basierend auf dem Resultat des Vergleichs der Signalstärken.

7. Netzsteuerungsverfahren nach Anspruch 6, wobei ein Herausfiltern der entsprechenden kontrollierten Anzahl von betroffenen kontrollierten APs basierend auf einem Vergleichsresultat zwischen den Signalstärken Folgendes umfasst:
als Reaktion darauf, dass die Signalstärken, die den APs entsprechen, identisch sind, Erfassen (801) von Zugriffszeiten, die den APs in der Netztopologie entsprechen; und
Vergleichen (802) der Zugriffszeiten für eine Zeitreihe und Herausfiltern der entsprechenden kontrollierten Anzahl von betroffenen kontrollierten APs basierend auf einem Resultat des Vergleichs der Zugriffszeiten.

8. Netzsteuerungsverfahren nach Anspruch 1, wobei die Steuerungsrichtlinie in einer Steuerungsnachricht in einem TLV-Format übermittelt wird.

9. Netzsteuerungsverfahren, durchgeführt von einem Zugangspunkt, AP, **dadurch gekennzeichnet, dass** es Folgendes umfasst:
Empfangen (1001) einer Steuerungsrichtlinie von einer Zugriffssteuerung, wobei die Steuerungsrichtlinie von der Zugriffssteuerung basierend auf einer aktuellen Anzahl von APs in einem normalen Zugriffszustand in einer Netztopologie und einer Referenzanzahl der APs in dem normalen Zugriffszustand in der Netztopologie bestimmt wird; und
Anpassen (1002) des Zugriffszustands der APs basierend auf der Steuerungsrichtlinie;
wobei die Steuerungsrichtlinie in einer Steuerungsnachricht im TLV-Format übermittelt wird und ein Anpassen (1002) des Zugriffszustands der APs basierend auf der Steuerungsrichtlinie mindestens eines von Folgenden umfasst:
Unterbinden des Zugriffs von STAs basierend auf der Steuerungsnachricht; oder
Wiederaufnehmen des Zugriffs der STAs basierend auf der Steuerungsnachricht.

10. Zugriffssteuerung (1100), umfassend einen Prozessor (1102) und einen Speicher (1101), in dem ein Computerprogramm gespeichert ist, das, wenn es von dem Prozessor (1102) ausgeführt wird, den Prozessor (1102) veranlasst, das Netzsteuerungsverfahren nach einem der Ansprüche 1 bis 8 durchzuführen.

11. Zugangspunkt (1200), umfassend einen Prozessor (1202) und einen Speicher (1201), in dem ein Computerprogramm gespeichert ist, das, wenn es von dem Prozessor (1202) ausgeführt wird, den Prozessor (1202) veranlasst, das Netzsteuerungsverfahren nach Anspruch 9 durchzuführen.

12. Computerlesbares Speichermedium, auf dem ein Programm gespeichert ist, das bei Ausführung durch einen Prozessor den Prozessor veranlasst, das Netzsteuerungsverfahren, das von einer Zugriffssteuerung (1100) nach einem der Ansprüche 1 bis 8 durchgeführt wird, oder das Netzsteuerungsverfahren, das von einem Zugriffspunkt (1200) nach Anspruch 9 durchgeführt wird, durchzuführen.

## Revendications

1. Procédé de contrôle de réseau mis en œuvre par un contrôleur d'accès, AC, comprenant :
l'acquisition (201) d'un nombre actuel de points d'accès, APs, se trouvant dans un état d'accès normal au sein d'une topologie de réseau ;
la détermination (202) d'un nombre contrôlé de points d'accès, APs sur la base du nombre actuel et d'un nombre de référence de points d'accès APs dans l'état d'accès normal, et l'extraction de la topologie du réseau un nombre contrôlé correspondant de points d'accès cibles contrôlés ; et
la détermination (203) d'une politique de contrôle pour les points d'accès cibles contrôlés sur la base du nombre actuel
et du nombre de référence, le procédé étant **caractérisé en ce qu'**il comprend en outre :
l'envoi de la politique de contrôle aux points d'accès cibles contrôlés, afin que les points d'accès cibles contrôlés soient configurés pour régler l'état d'accès des points d'accès contrôlés sur la base de la politique de contrôle ;
dans lequel l'état d'accès normal signifie que les points d'accès APs sont normalement accessibles par les stations STAs, et la détermination (203) d'une politique de contrôle pour les points d'accès cibles contrôlés, sur la base du nombre actuel et du nombre de référence, comprend l'une des opérations suivantes :
lorsque le nombre actuel est supérieur au nombre de référence, il est déterminé que la politique de contrôle applicable aux points d'accès cibles contrôlés consiste à contrôler les points d'accès cibles contrôlés afin d'empêcher l'accès des STAs ; et
lorsque le nombre actuel est inférieur au nombre de référence, il est déterminé que la politique de contrôle applicable aux points d'accès cibles contrôlés consiste à contrôler les points d'accès cibles contrôlés afin de rétablir l'accès des STAs. et

2. Procédé de contrôle de réseau selon la revendication 1, dans lequel la détermination (202) d'un nombre contrôlé de points d'accès APs sur la base du nombre actuel et d'un nombre de référence des points d'accès APs en état d'accès normal comprend :
l'obtention (301) d'une différence entre le nombre actuel et le nombre de référence des points d'accès (PA) en état d'accès normal ; et
la prise en considération (302) de la différence comme nombre contrôlé de points d'accès.

3. Procédé de contrôle de réseau selon la revendication 1, dans lequel la sélection d'un nombre contrôlé correspondant de points d'accès cibles contrôlés à partir de la topologie du réseau comprend :
la sélection du nombre contrôlé correspondant de points d'accès cibles, sur la base d'au moins l'un des éléments suivants : les niveaux dans la topologie du réseau correspondant aux points d'accès, les modes de liaison montante correspondant aux points d'accès, les intensités de signal correspondant aux points d'accès, ou les moments où les points d'accès accèdent au réseau, tels qu'ils apparaissent dans la topologie du réseau.

4. Procédé de contrôle de réseau selon la revendication 1, dans lequel la sélection d'un nombre contrôlé correspondant de points d'accès cibles contrôlés à partir de la topologie du réseau comprend :
l'acquisition (501) des niveaux correspondant aux points d'accès APs dans la topologie du réseau ; et
la comparaison (502) des niveaux, et la sélection du nombre contrôlé correspondant de points d'accès cibles contrôlés sur la base d'un résultat de la comparaison entre les niveaux.

5. Procédé de contrôle de réseau selon la revendication 4, dans lequel la sélection du nombre contrôlé correspondant de points d'accès cibles contrôlés, sur la base d'un résultat de comparaison entre les niveaux, comprend :
en réponse au fait que les niveaux correspondant aux points d'accès APs sont identiques, l'acquisition (601) des modes de liaison montante correspondant aux points d'accès dans la topologie du réseau ;
la comparaison (602) des priorités des modes de liaison montante, et la sélection d'un nombre contrôlé correspondant de points d'accès cibles contrôlés sur la base d'un résultat de la comparaison entre les priorités des modes de liaison montante.

6. Procédé de contrôle de réseau selon la revendication 5, dans lequel la sélection du nombre contrôlé correspondant de points d'accès cibles contrôlés, sur la base d'un résultat de la comparaison entre les priorités des modes de liaison montante, comprend :
en réponse au fait que les priorités des modes de liaison montante correspondant aux points d'accès sont identiques, l'acquisition (701) des intensités de signal correspondant aux points d'accès dans la topologie du réseau ; et
la comparaison (702) des intensités de signal, et la sélection du nombre contrôlé correspondant de points d'accès cibles contrôlés sur la base d'un résultat de la comparaison entre les intensités de signal.

7. Procédé de contrôle de réseau selon la revendication 6, dans lequel la sélection du nombre contrôlé correspondant de points d'accès cibles contrôlés, sur la base d'un résultat de comparaison entre les intensités de signal comprend :
en réponse au fait que les intensités de signal correspondant aux points d'accès sont identiques, l'acquisition (801) des temps d'accès correspondant aux points d'accès dans la topologie du réseau ; et
la comparaison (802) des temps d'accès pour une séquence temporelle, et la sélection du nombre contrôlé correspondant de points d'accès cibles contrôlés sur la base d'un résultat de la comparaison entre les temps d'accès.

8. Procédé de contrôle de réseau selon la revendication 1, dans lequel la politique de contrôle est véhiculée par un message de contrôle au format TLV.

9. Procédé de contrôle de réseau mis en œuvre par un point d'accès AP, **caractérisé en ce qu'**il comprend :
la réception (1001) d'une politique de contrôle provenant d'un contrôleur d'accès, ladite politique de contrôle étant déterminée par le contrôleur d'accès sur la base d'un nombre actuel de points d'accès (PA) se trouvant dans un état d'accès normal au sein d'une topologie de réseau et d'un nombre de référence desdits points d'accès se trouvant dans l'état d'accès normal au sein de ladite topologie de réseau ; et
le réglage (1002) de l'état d'accès des points d'accès sur la base de la politique de contrôle;
dans lequel la politique de contrôle est véhiculée par un message de contrôle au format TLV, et le réglage (1002) de l'état d'accès des points d'accès sur la base de la politique de contrôle comprend au moins l'une des opérations suivantes :
l'empêchement de l'accès des STAs sur la base du message de contrôle ; ou
le rétablissement de l'accès des STAs sur la base du message de contrôle. ou

10. Contrôleur d'accès (1100), comprenant un processeur (1102) et une mémoire (1101) stockant un programme informatique qui, lorsqu'il est exécuté par le processeur (1102), amène le processeur (1102) à mettre en œuvre le procédé de contrôle de réseau selon l'une quelconque des revendications 1 à 8.

11. Point d'accès (1200), comprenant un processeur (1202) et une mémoire (1201) stockant un programme informatique qui, lorsqu'il est exécuté par le processeur (1202), amène le processeur (1202) à mettre en œuvre le procédé de contrôle de réseau selon la revendication 9.

12. Support de stockage lisible par ordinateur, contenant un programme qui, lorsqu'il est exécuté par un processeur, amène ce dernier à mettre en œuvre le procédé de contrôle de réseau mis en œuvre par un contrôleur d'accès (1100) selon l'une quelconque des revendications 1 à 8, ou à mettre en œuvre le procédé de contrôle de réseau mis en œuvre par un point d'accès (1200) selon la revendication 9.
